# EUROPÄISCHE PATENTSCHRIFT

(11) **EP 3 158 842 B1**
(45) Veröffentlichungstag und Bekanntmachung des Hinweises auf die Patenterteilung: **15.08.2018**
(21) Anmeldenummer: 16176381.8
(22) Anmeldetag: 27.06.2016
(51) Int. Cl.: A01B 51/02, A01B 59/048

(54) **LANDWIRTSCHAFTLICHES FAHRZEUG**
AGRICULTURAL VEHICLE
VÉHICULE AGRICOLE

(30) Priorität: 11.09.2015 DE 102015115350
(43) Veröffentlichungstag der Anmeldung: 26.04.2017
(73) Patentinhaber: CLAAS Tractor SAS, 78141 Velizy-Villacoublay (FR)
(72) Erfinder: Arrouart, Cyrille, 75015 Paris (FR)
(74) Vertreter: Budach, Steffen

(56) Entgegenhaltungen:
- EP-A1- 0 449 103
- EP-A1- 2 639 140
- DE-A1- 3 248 648

## Beschreibung

Die vorliegende Erfindung betrifft ein landwirtschaftliches Fahrzeug gemäß dem Oberbegriff des Anspruches 1.

Landwirtschaftliche Fahrzeuge, insbesondere Traktoren, kommen unter anderem bei der Arbeit mit Stroh- oder Silageballen sowie beim Beladen von Anhängern zum Einsatz. Hierzu ist an dem landwirtschaftlichen Fahrzeug bei Bedarf ein Frontlader mittels einer U-förmigen Aufnahmevorrichtung anbringbar. Derartige Aufnahmevorrichtungen umfassen zwei plattenförmige, sich in vertikaler Richtung erstreckende Seitenteile, welche an einer Fahrzeugkarosserie befestigt sind. Die Fahrzeugkarosserie kann als selbstragende Karosserie ausgeführt sein oder einen Rahmen aufweisen. Die beiden Seitenteile sind durch eine Quertraverse, die unterhalb der Fahrzeugkarosserie verläuft, miteinander verbunden. An den Seitenteilen der Aufnahmevorrichtung wird der Frontlader mittels seiner Halterungen befestigt. Aus der EP-A-0 449 103 ist ein Traktor gemäß dem ersten Teil des Anspruchs 1 bekannt. Aus der gattungsgemäßen US 5,263,810 A ist ein als Traktor ausgeführtes landwirtschaftliches Fahrzeug mit einer solchen U-förmigen Aufnahmevorrichtung für einen Frontlader bekannt. Die Aufnahmevorrichtung ist als ein U-förmiger Rahmen ausgeführt und an einem Fahrzeugrahmen des Traktors zwischen dem vorderen und dem hinteren Fahrwerk fixiert. Der Traktor umfasst einen Motor, ein Schwungmassengehäuse, sowie ein Getriebegehäuse, welche in Längsrichtung hintereinander auf dem Fahrzeugrahmen angeordnet sind. Die Anbringung der Aufnahmevorrichtung stellt hohe Anforderungen an die Einhaltung Fertigungstoleranzen der Bauteile der Aufnahmevorrichtung als auch der Befestigungspunkte an dem Traktor, um eine spannungsfreie Befestigung der Aufnahmevorrichtung zu erreichen.

Aufgabe der vorliegenden Erfindung ist es, ein landwirtschaftliches Fahrzeug der eingangs genannten Art derart weiterzubilden, das sich durch eine Vereinfachung der Aufnahmevorrichtung auszeichnet.

Diese Aufgabe wird erfindungsgemäß durch die Merkmale des Anspruches 1 gelöst.

Vorteilhafte Weiterbildungen der Erfindung sind Gegenstand der Unteransprüche.

Gemäß dem Anspruch 1 wird ein landwirtschaftliches Fahrzeug, insbesondere Traktor, mit einer Fahrzeugkarosserie, auf dem in Längsrichtung ein Motor, ein Schwungmassengehäuse sowie ein Getriebegehäuse angeordnet sind, einem vorderen und einem hinteren Fahrwerk sowie einer Aufnahmevorrichtung zur Anbringung eines Arbeitsgerätes, vorgeschlagen, welches dadurch gekennzeichnet ist, dass die Aufnahmevorrichtung als zwei sich in Längsrichtung der Fahrzeugkarosserie zwischen dem vorderen Fahrwerk und dem hinteren Fahrwerk erstreckende, im Wesentlichen plattenförmige Rahmenelemente ausgebildet ist, deren Erstreckung in Längsrichtung des Fahrzeugs ein Mehrfaches ihrer vertikalen Ausdehnung beträgt und dass die Rahmenelemente jeweils einen vorderen Befestigungsabschnitt und einen hinteren Befestigungsabschnitt zur Montage an dem Fahrzeug aufweisen, deren Abstand zueinander so groß ist, dass der Bereich des Motors berührungslos überbrückt ist, sowie einen zwischen den Befestigungsabschnitten befindlichen Aufnahmeabschnitt zur Anbringung des Arbeitsgerätes. Die Ausführung der Aufnahmevorrichtung als zwei sich im Wesentlichen achsparallel zu der Fahrzeugkarosserie ersteckende Rahmenelemente, deren vorderer und hinterer Befestigungsabschnitt eine berührungslose Überbrückung des Bereichs ermöglichen, in welchem der Motor an der Fahrzeugkarosserie montiert ist, verhindern eine Übertragung von Schwingungen auf die Fahrzeugkarosserie. Des Weiteren ist die Montage und Demontage der Aufnahmevorrichtung deutlich vereinfacht und geht damit schneller von statten, da auf ein die beiden Rahmenelemente miteinander verbindendes, quer zur Längsachse der Fahrzeugkarosserie angeordnetes Bauteil, wie die Quertraverse gemäß der US 5,263,810 A verzichtet wird. Somit sinken die Anforderungen an die Fertigungstoleranzen der beiden Rahmenelemente. Zusätzlich wird durch den Fortfall der Quertraverse die Bodenfreiheit des landwirtschaftlichen Fahrzeugs erhöht.

Hierbei kann der vordere Befestigungsabschnitt des jeweiligen Rahmenelementes an dem vorderen Fahrwerk befestigt sein. Hierdurch lässt sich eine Zunahme der Stabilität in Längsrichtung des Fahrzeugs erreichen. Dies kann notwendig sein, wenn schwere Frontanbaugeräte an dem Fahrzeug zum Einsatz kommen.

Vorteilhaft ist es, wenn der hintere Befestigungsabschnitt des jeweiligen Rahmenelementes am Schwungmassegehäuse befestigt ist. Von dem Rahmenelement aufgenommene Längskräfte werden auf diese Weise in den hinteren Teil des Fahrzeugs eingeleitet.

Eine vorteilhafte Weiterbildung sieht vor, dass ausgehend von dem hinteren Befestigungsabschnitt des jeweiligen Rahmenelementes eine sich in Längsrichtung des Fahrzeugs erstreckende Befestigungsschiene an dem Rahmenelement angeordnet werden kann. Mittels der an dem hinteren Befestigungsabschnitt des jeweiligen Rahmenelementes angreifenden Befestigungsschiene können in Längsrichtung des Fahrzeugs wirkende Kräfte in den hinteren Fahrzeugteil geleitet werden. Die Befestigungsschiene kann lösbar mit dem Rahmenelement verbunden sein.

Vorzugsweise kann die jeweilige Befestigungsschiene endseitig mit dem Getriebegehäuse oder dem hinteren Fahrwerk verbunden sein. Die aus der Last des Frontladers resultierenden Längskräfte können auf diese Weise über ausreichend weit beabstandete Befestigungspunkte unmittelbar in das Getriebegehäuse und das hintere Fahrwerk eingeleitet werden.

Insbesondere können zumindest die Rahmenelemente als Gussteile ausgeführt sein. Dies ermöglicht eine kostengünstige Herstellung der Rahmenelemente. Die Befestigungsschienen können ebenfalls als Gussteile ausgeführt sein.

Weiterhin können die Rahmenelemente auf wenigstens einer Seite eine zumindest abschnittsweise strukturiere Oberfläche aufweisen. Die Strukturierung der Oberflächen kann im Wesentlichen der Struktur eines Stabwerkes entsprechen. Durch die zumindest einseitig vorgesehene Strukturierung der Oberflächen kann die Steifigkeit der Rahmenelemente erhöht werden. Vorzugsweise kann die zumindest abschnittsweise Strukturierung der Oberfläche beidseitig vorgesehen sein, das heißt auf der der Fahrzeugkarosserie zugewandten und abgewandten Seite der Rahmenelemente.

Vorteilhafterweise kann das jeweilige Rahmenelement einen konkav geformten Abschnitt zwischen dem vorderen Befestigungsabschnitt und dem Aufnahmeabschnitt aufweisen. Dieser konkav geformte Abschnitt befindet sich in einem Abstand zu dem vorderen Fahrwerk respektive einem hintersten Punkt der Vorderräder, dass ein maximaler Lenkwinkel realisierbar ist. Eine Berührung des Rahmenelementes durch ein an dem vorderen Fahrwerk angeordnetes Vorderrad soll auch bei maximalem Lenkeinschlag nicht erfolgen.

Eine vorteilhafte Weiterbildung sieht vor, dass in Abhängigkeit von der durch das Rahmenelement zu überspannenden Länge plattenförmige Versteifungselemente an den Rahmenelementen befestigbar sind. Die Versteifungselemente können dabei innen- und/oder außenseitig des Rahmenelementes angebracht sein.
Durch diese Maßnahme wird eine Art Sandwichstruktur erzielt, die sich durch eine besonders hohe Festigkeit und Verwindungssteifigkeit auszeichnet. Die von dem jeweiligen Rahmenelement zu überbrückende Länge ergibt sich in Abhängigkeit von der Zylinderzahl des in Fahrzeuglängsrichtung verbauten Motors, beispielsweise eines Vier- oder Sechszylindermotors. Entsprechend variiert die Erstreckung des Motors in Längsrichtung des Fahrzeugs. Um dennoch eine berührungslose Überbrückung des Motorbereichs zu erreichen, muss die Länge der Rahmenelemente entsprechend gewählt werden. Damit die Stabilität der montierten Rahmenelemente, welche bei einem Fahrzeug mit einem Sechszylindermotor länger sind, als bei einem Vierzylindermotor, gewährleistet ist, lassen sich die plattenförmigen Versteifungselemente in einfacher Weise nachrüsten. Die plattenförmigen Versteifungselemente sind hinsichtlich ihrer Kontur dabei an die der Rahmenelemente angepasst. Für eine einfache Nachrüstbarkeit sind die plattenförmigen Versteifungselemente mit den Rahmenelementen verschraubbar.

Vorzugsweise können zumindest die Rahmenelemente mittels Schraubverbindungen lösbar mit dem Fahrzeug verbunden sein. Dies ermöglicht eine einfache und sichere Montage und Demontage der Rahmenelemente als auch der gegebenenfalls verwendeten Versteifungselemente. Ebenfalls erlaubt diese Ausbildung eine Nachrüstung an bestehenden landwirtschaftlichen Fahrzeugen.

Die Erfindung wird nachstehend anhand eines in den Zeichnungen dargestellten Ausführungsbeispieles näher erläutert.

Es zeigen:
- Fig. 1: eine schematische Seitenansicht eines landwirtschaftlichen Fahrzeugs;
- Fig. 2: eine schematische perspektivische Ansicht von Teilen der tragenden Struktur des Traktors;
- Fig. 3: eine Detailansicht der Aufnahmevorrichtung gemäß Fig. 2 von schräg hinten;
- Fig. 4: eine Detailansicht der Aufnahmevorrichtung gemäß Fig. 2 von schräg vorne mit montierter Halterung eines Frontladers;

- Fig. 5: eine schematische Darstellung von Teilen der tragenden Struktur des Traktors in einer perspektivischen Ansicht von hinten.

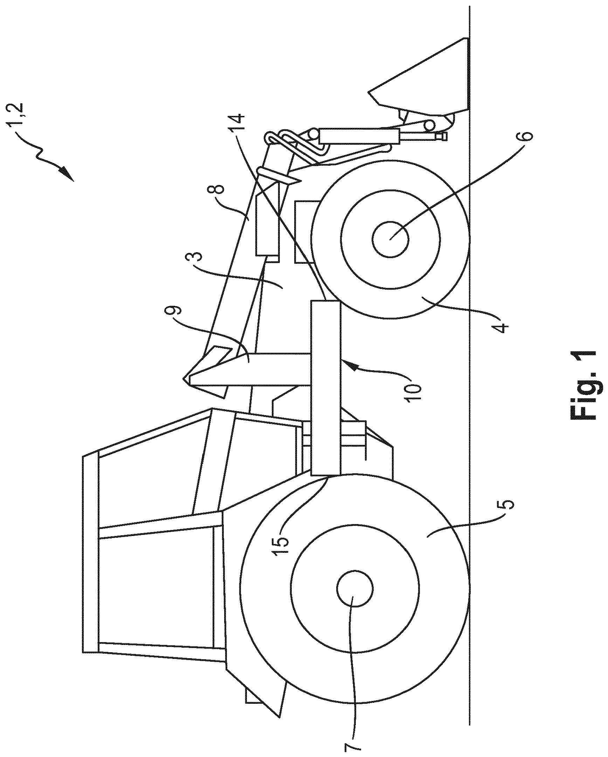

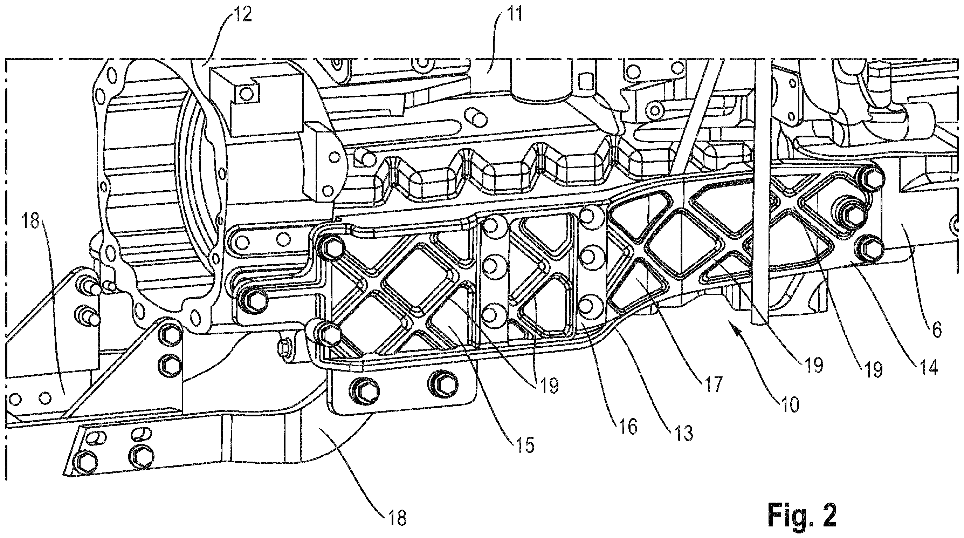

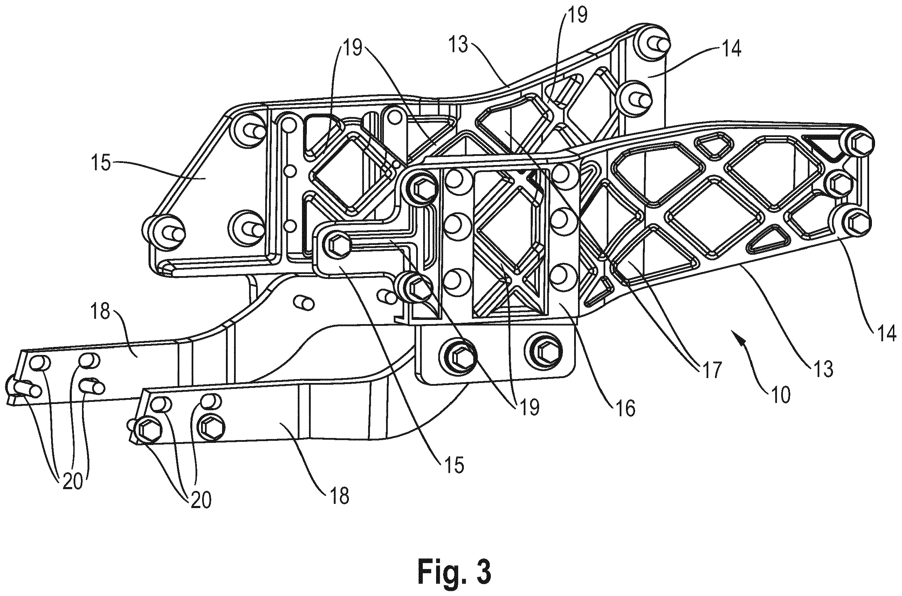

Die Darstellung in Fig. 1 zeigt in einer schematischen Seitenansicht ein landwirtschaftliches Fahrzeug 1, insbesondere einen Traktor 2, an dessen Fahrzeugkarosserie 3 lenkbare Vorderräder 4 an einem vorderen Fahrwerk 6, Hinterräder 5 an einem hinteren Fahrwerk 7 und ein als Arbeitsgerät ausgebildeter Frontlader 8 montiert sind. Die Fahrzeugkarosserie 3 kann als selbstragende Karosserie ausgeführt sein oder einen ein- oder mehrteiligen Rahmen aufweisen. Der Frontlader 8 ist mittels zweier an gegenüberliegenden Seiten der Fahrzeugkarosserie 3 zu montierenden Halterungen 9 an dem Traktor 2 anbringbar. Hierzu ist an der Fahrzeugkarosserie 3 eine Aufnahmevorrichtung 10 lösbar angebracht, die der Befestigung der Halterungen 9 des Frontladers dient. Die Aufnahmevorrichtung 10 wird nachfolgend anhand der Fig. 2 und Fig. 3 näher erläutert. Die Aufnahmevorrichtung 10 ist mittels Schraubverbindungen an dem Fahrzeug 1 angebracht, so dass diese bei Bedarf abbaubar ist. Zugleich ermöglicht diese Ausführung der Aufnahmevorrichtung 10 auch eine Nachrüstung der Fahrzeuge.

Fig. 2 zeigt in einer perspektivischen Ansicht und unter Weglassung von sie beim vollständigen Traktor 2 verbergenden Karosserieblechen einzelne Komponenten der Fahrzeugkarosserie 3. An der Fahrzeugkarosserie 3 ist in Längsrichtung gesehen ausgehend von dem vorderen Fahrwerk 6 unter anderem ein Motor 11 sowie ein sich daran anschließendes Schwungmassegehäuse 12 angeordnet. Der Motor 11 ist längs verbaut und von einer nicht näher dargestellten Motorhaube abgedeckt. Ebenfalls sich in Längsrichtung erstreckend ist die zweiteilige Aufnahmevorrichtung 10 sichtbar, deren Komponenten im Wesentlichen spiegelbildlich parallel zueinander an dem Traktor 2 angeordnet sind. Die Aufnahmevorrichtung 10 umfasst zwei Rahmenelemente 13, welche sich im Wesentlichen von dem vorderen Fahrwerk 6 parallel zu dem Motor 6 in Richtung des hinteren Fahrwerks 7 erstrecken. Die beiden Rahmenelemente 13 sind vorzugsweise als Gussteile ausgeführt.

Zur Befestigung an dem Traktor 2 weist das jeweilige Rahmenelement 13 einen vorderen Befestigungsabschnitt 14 und einen hinteren Befestigungsabschnitt 15 auf. Mit dem vorderen Befestigungsabschnitt 14 ist das Rahmenelement 13 an dem vorderen Fahrwerk 6 mittels einer Schraubverbindung montiert. Das Rahmenelement 13 weist eine Erstreckung in Längsrichtung des Traktors 2 auf, welche einem Mehrfachen seiner vertikalen Ausdehnung entspricht. Der dem hinteren Fahrwerk 7 zugewandte hintere Befestigungsabschnitt 15 ist, ebenfalls durch eine Schraubverbindung, mit dem Schwungmassegehäuse 12 verbunden. Wie der Darstellung in Fig. 3 zu entnehmen ist, variiert dabei die Ausgestaltung des hinteren Befestigungsabschnittes 15 der beiden Rahmenelemente 13. Während der eine, vordergründig dargestellte, Befestigungsabschnitt 15 im Wesentlichen die Form eines liegenden T aufweist, ist der dahinterliegende hintere Befestigungsabschnitt 15 im Wesentlichen dreieckförmig ausgebildet. Die Ausgestaltung der hinteren Befestigungsabschnitte 15 hängt von der Form der Oberflächen des oder der Bauteile ab, mit denen diese verschraubt werden sollen. Insbesondere bei einer Nachrüstung an einem landwirtschaftlichen Fahrzeug 1 kann diese Variation der hinteren Befestigungsabschnitte erforderlich werden.

Zur Aufnahme der Halterungen 9 an den Aufnahmevorrichtungen 10 weist das jeweilige Rahmenelement 13 einen zwischen dem vorderen und dem hinteren Befestigungsabschnitt 14, 15 angeordneten Aufnahmeabschnitt 16 auf. Mit diesem Aufnahmeabschnitt 16 ist die entsprechende Halterung 9 des Frontladers 8 verbindbar, vorzugsweise durch Verschrauben. Der vordere Befestigungsabschnitt 14, der hintere Befestigungsabschnitt 15 sowie der Aufnahmeabschnitt 16 sind in Längsrichtung des Rahmenelementes 13 hintereinander angeordnet.

Wie insbesondere aus der Zusammenschau von Fig. 2 und Fig. 3 ersichtlich ist, weist das Rahmenelement 13 ausgehend von seinem vorderen Befestigungsabschnitt 14 einen im Wesentlichen geraden Verlauf parallel zu der Fahrzeugkarosserie 3 auf. Zwischen dem vorderen Befestigungsabschnitt 14 und dem Aufnahmeabschnitt 16 weist das Rahmenelement 13 einen Abschnitt 17 mit konkavem Verlauf auf. Hierdurch erfährt das Rahmenelement 13 in Richtung der Vorderräder 4 eine Verjüngung oder Einschnürung, so dass eine Beeinträchtigung der Einschlagbewegungsfreiheit der Vorderräder 4 durch die Aufnahmevorrichtung 10 beziehungsweise das Rahmenelement 13 zumindest reduziert wird.

Der abschnittsweise geschwungene Verlauf des Rahmenelementes 13 sorgt zudem für eine Beabstandung zu dem Motor 11, so dass das Rahmenelement 13 wegen der Befestigung an dem vorderen Fahrwerk 6 sowie dem Schwungmassegehäuse 12 mit dem Motor 11 nicht in Berührung kommt. Die berührungslose Anordnung der Rahmenelemente 13 in Bezug auf den Motor 11 verhindert das Übertragen von Schwingungen des Motors 11 auf die Rahmenelemente 13 der Aufnahmevorrichtung 10 und damit auf den Frontlader 8.

Zur weiteren Begünstigung der Kraftableitung in Längsrichtung des Fahrzeuges 1 ist vorgesehen, dass an dem hinteren Befestigungsabschnitt 15 des jeweiligen Rahmenelementes 13 zusätzlich eine Befestigungsschiene 18 anbringbar ist. Die Befestigungsschiene 18 verläuft im Wesentlichen parallel zu der Fahrzeugkarosserie 3 und ist endseitig mit dem (nicht dargestellten) Getriebegehäuse des Traktors 2 verbunden. Auf diese Weise kann die Last des Frontladers 8 über ausreichend weit beabstandete Befestigungspunkte in die tragende Struktur des Fahrzeugs 1 beziehungsweise Traktors 2 eingeleitet werden. Die Befestigungsschienen 18 weisen endseitig Langlöcher 20 auf, um die Befestigungsschienen 18 mit dem Getriebegehäuse oder dem hinteren Fahrwerk 7 verschrauben zu können. Die Langlöcher 20 bieten ausreichend Spiel in Längsrichtung des Traktors 2 für eine spannungsfreie Befestigung der Befestigungsschienen 18. Die Befestigungsschienen 18 können ebenfalls als Gussteile ausgeführt sein.

Wie ebenfalls aus der Darstellung der Fig. 2 und 3 erkennbar ist, weisen die Oberflächen der Rahmenelemente 13 eine Strukturierung 19 auf. Die Strukturierung 19 hat dabei näherungsweise die Form eines Stabwerkes. Wie in Fig. 3 dargestellt ist, ist die Strukturierung 19 sowohl auf der dem Motor 11 zugewandten als auch abgewandten Seite des Rahmenelements 13 vorgesehen. Eine nur einseitig Strukturierung 19, das heißt nur auf der Innenseite oder der Außenseite des Rahmenelementes 13 ist ebenfalls denkbar, um eine hinreichende Steifigkeit des Rahmenelementes 13 zu erreichen. Die Strukturierung 19 trägt zu einer zusätzlichen Erhöhung der Steifigkeit des Rahmenelementes 13 bei.

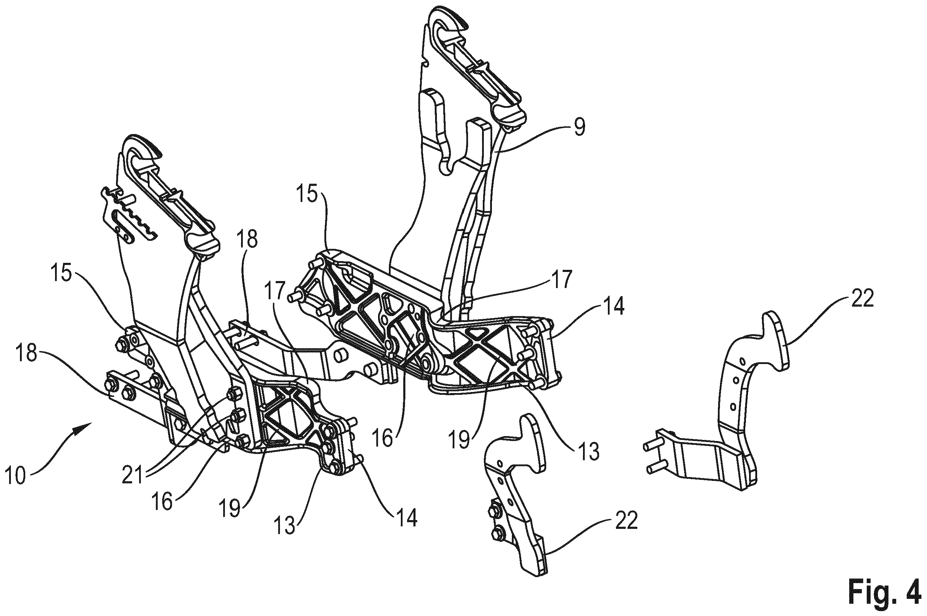

In Fig. 4 ist eine Detailansicht der Aufnahmevorrichtung 10 gemäß Fig. 2 von schräg vorne mit daran montierter Halterung 9 eines Frontladers dargestellt. Die jeweilige Halterung 9 des Frontladers 8 ist außenseitig mittels Schraubverbindungen 21 an dem entsprechenden Aufnahmeabschnitt 16 des jeweiligen Rahmenelementes 13 lösbar befestigt. In Richtung des vorderen Fahrtwerks 6 gesehen sind die konkaven Abschnitte 17 deutlich zu erkennen. Diese konkav geformten Abschnitte 17 befinden sich in einem Abstand zu dem vorderen Fahrwerk 6 respektive einem hintersten Punkt der Vorderräder 4, dass ein maximaler Lenkwinkel realisierbar ist. Eine Berührung des Rahmenelementes 13 durch eines der an dem vorderen Fahrwerk 6 angeordneten Vorderräder 4 wird dadurch auch bei maximalem Lenkeinschlag vermieden.

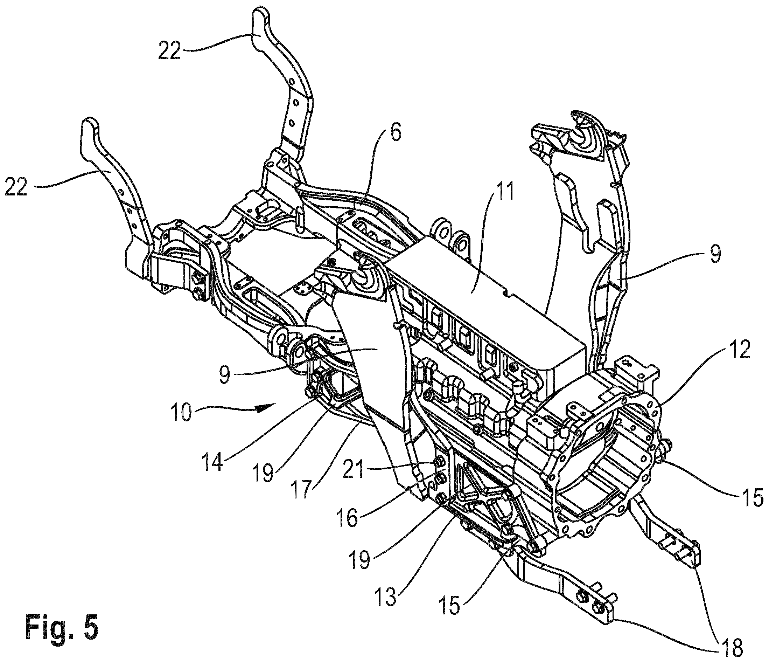

Weiterhin zeigt die Darstellung in Fig. 4 zwei Schutzbügel 22, welche, wie in Fig. 5 dargestellt, am vorderen Ende der Fahrzeugkarosserie 3 respektive am vorderen Fahrwerk 6 angebracht sind. Die Schutzbügel 22 werden gleichfalls mittels einer Schraubverbindung an dem Fahrzeug 1 befestigt. Die Schutzbügel 22 dienen dazu, eine den Motor 11 abdeckende Motorhaube vor einer Kollision mit dem Frontlader 8 zu schützen. Die Anbringung der Schutzbügel 22 kann im Rahmen einer Nachrüstung eines Traktors 2 mit der Aufnahmevorrichtung 10 erfolgen, wenn für diesen ursprünglich eine Anbringung eines Frontladers 8 nicht vorgesehen war.

Fig. 5 zeigt eine schematische Darstellung von Teilen der tragenden Struktur des Traktors 2 in einer perspektivischen Ansicht von hinten. Am vorderen Fahrwerk 6 sind die Schutzbügel 22 angeschraubt, die eine Kollision des Frontladers 8 mit der Motorhaube verhindern sollen. Das jeweilige Rahmenelement 13 ist mit seinem vorderen Befestigungsabschnitt 14 vordem Motor 11 mit dem vorderen Fahrwerk 6 verschraubt. Es erstreckt sich über die Länge des Motors 11 hinweg im Wesentlichen parallel zu diesem und ist mit seinem hinteren Befestigungsabschnitt 15 mit dem Schwungmassegehäuse verschraubt. Der Abstand zwischen dem vorderen Befestigungsabschnitt 14 und dem hinteren Befestigungsabschnitt 15 des jeweiligen Rahmenelementes 13 ist derart gewählt, dass das jeweilige Rahmenelement 13 den Motor 11 nicht berührt. An den Aufnahmeabschnitten 16 sind die Halterungen 9 des Frontladers angeschraubt, die sich im Wesentlichen vertikal zum Rahmenelement 13 nach oben erstrecken. Die Befestigungsschienen 18, die eine vergleichbare Ausgestaltung wie die Rahmenelemente 13 aufweisen, sind im Bereich der hinteren Befestigungsabschnitte 15 an dem jeweiligen Rahmenelement 13 durch eine Schraubverbindung befestigt. Die Befestigungsschienen 18 erstrecken sich in Richtung des hinteren Fahrwerks 7, wo sie mit dem Getriebegehäuse oder dem hinteren Fahrwerk 7 verschraubt sind.

### Bezugszeichenliste

- **1**: Landwirtschaftliches Fahrzeug
- **2**: Traktor
- **3**: Fahrzeugkarosserie
- **4**: Vorderrad
- **5**: Hinterrad
- **6**: Vorderes Fahrwerk
- **7**: Hinteres Fahrwerk
- **8**: Frontlader
- **9**: Halterung
- **10**: Aufnahmevorrichtung
- **11**: Motor
- **12**: Schwungmassegehäuse
- **13**: Rahmenelement
- **14**: Vorderer Befestigungsabschnitt
- **15**: Hinterer Befestigungsabschnitt
- **16**: Aufnahmeabschnitt
- **17**: Konkaver Abschnitt
- **18**: Befestigungsschiene
- **19**: Strukturierung
- **20**: Langlöcher
- **21**: Schraubverbindung
- **22**: Schutzbügel

## Patentansprüche

1. Landwirtschaftliches Fahrzeug (1), insbesondere Traktor (2), mit einer Fahrzeugkarosserie (3), auf dem in Längsrichtung ein Motor (11), ein Schwungmassegehäuse (12) sowie ein Getriebegehäuse angeordnet sind, einem vorderen Fahrwerk (6) und einem hinteren Fahrwerk (7) sowie einer Aufnahmevorrichtung (10) zur Anbringung eines Arbeitsgerätes (8), **dadurch gekennzeichnet, dass** die Aufnahmevorrichtung (10) als zwei sich in Längsrichtung der Fahrzeugkarosserie (3) zwischen dem vorderen Fahrwerk (6) und dem hinteren Fahrwerk (7) erstreckende, im Wesentlichen plattenförmige Rahmenelemente (13) ausgebildet ist, deren Erstreckung in Längsrichtung des Fahrzeugs (1) ein Mehrfaches ihrer vertikalen Ausdehnung beträgt und dass die Rahmenelemente (13) einen vorderen Befestigungsabschnitt (14) und einen hinteren Befestigungsabschnitt (15) zur Montage an dem Fahrzeug (1) aufweisen, deren Abstand zueinander so groß ist, dass der Bereich der Längserstreckung des Motors (11) berührungslos überbrückt ist, sowie einen zwischen dem vorderen Befestigungsabschnitt (14) und dem hinteren Befestigungsabschnitt (15) befindlichen Aufnahmeabschnitt (16) zur Anbringung des Arbeitsgerätes (8).

2. Landwirtschaftliches Fahrzeug (1) nach Anspruch 1, **dadurch gekennzeichnet, dass** der vordere Befestigungsabschnitt (14) des jeweiligen Rahmenelementes (13) an dem vorderen Fahrwerk (6) befestigt ist.

3. Landwirtschaftliches Fahrzeug (1) nach einem der Ansprüche 1 oder 2, **dadurch gekennzeichnet, dass** der hintere Befestigungsabschnitt (15) des jeweiligen Rahmenelementes (13) an dem Schwungmassegehäuse (12) befestigt ist.

4. Landwirtschaftliches Fahrzeug (1) nach einem der Ansprüche 1 bis 3, **dadurch gekennzeichnet, dass** ausgehend von dem hinteren Befestigungsabschnitt (15) des jeweiligen Rahmenelementes (13) eine sich in Längsrichtung des Fahrzeugs (1) erstreckende Befestigungsschiene (18) an dem Rahmenelement (13) angeordnet ist.

5. Landwirtschaftliches Fahrzeug (1) nach Anspruch 4, **dadurch gekennzeichnet, dass** die jeweilige Befestigungsschiene (18) endseitig mit dem Getriebegehäuse oder dem hinteren Fahrwerk (7) verbunden ist.

6. Landwirtschaftliches Fahrzeug (1) nach einem der Ansprüche 1 bis 5, **dadurch gekennzeichnet, dass** die Rahmenelemente (13) als Gussteile ausgeführt sind.

7. Landwirtschaftliches Fahrzeug (1) nach einem der Ansprüche 1 bis 6, **dadurch gekennzeichnet, dass** die Rahmenelemente (13) wenigstens einseitig eine zumindest abschnittsweise strukturiere Oberfläche (19) aufweisen.

8. Landwirtschaftliches Fahrzeug (1) nach einem der Ansprüche 1 bis 7, **dadurch gekennzeichnet, dass** das jeweilige Rahmenelement (13) einen konkav geformten Abschnitt (17) zwischen dem vorderen Befestigungsabschnitt (14) und dem Aufnahmeabschnitt (16) aufweist.

9. Landwirtschaftliches Fahrzeug (1) nach einem der Ansprüche 1 bis 8, **dadurch gekennzeichnet, dass** in Abhängigkeit von der durch das jeweilige Rahmenelement (13) zu überspannenden Länge plattenförmige Versteifungselemente an den Rahmenelementen (13) befestigbar sind.

10. Landwirtschaftliches Fahrzeug (1) nach einem der Ansprüche 1 bis 9, **dadurch gekennzeichnet, dass** zumindest die Rahmenelemente (13) mittels Schraubverbindungen lösbar mit dem Fahrzeug (1) verbunden sind.

## Claims

1. Agricultural vehicle (1), in particular tractor (2), with a vehicle body (3), on which are arranged in the longitudinal direction a motor (11), a flywheel housing (12) as well as a gearbox housing, a front chassis (6) and a rear chassis (7) as well as a mounting device (10) for attaching an implement (8), **characterized in that** the mounting device (10) is formed as two substantially plate-shaped frame elements (13) extending in the longitudinal direction of the vehicle body (3) between the front chassis (6) and the rear chassis (7), the extent of which in the longitudinal direction of the vehicle (1) is a multiple of their vertical extension and **in that** the frame elements (13) have a front fastening portion (14) and a rear fastening portion (15) for mounting on the vehicle (1), whose distance from each other is so large that the area of the longitudinal extent of the motor (11) is bridged without contact, as well as a mounting portion (16), located between the front fastening portion (14) and the rear fastening portion (15), for attaching the implement (8).

2. Agricultural vehicle (1) according to claim 1, **characterized in that** the front fastening portion (14) of the respective frame element (13) is fastened to the front chassis (6).

3. Agricultural vehicle (1) according to one of claims 1 or 2, **characterized in that** the rear fastening portion (15) of the respective frame element (13) is fastened to the flywheel housing (12).

4. Agricultural vehicle (1) according to one of claims 1 to 3, **characterized in that**, starting from the rear fastening portion (15) of the respective frame element (13), a fastening bar (18) extending in the longitudinal direction of the vehicle (1) is arranged on the frame element (13).

5. Agricultural vehicle (1) according to claim 4, **characterized in that** the respective fastening bar (18) is connected at the end to the gearbox housing or the rear chassis (7).

6. Agricultural vehicle (1) according to one of claims 1 to 5, **characterized in that** the frame elements (13) are made as castings.

7. Agricultural vehicle (1) according to one of claims 1 to 6, **characterized in that** the frame elements (13), at least on one side, have a surface (19) that is structured at least in portions.

8. Agricultural vehicle (1) according to one of claims 1 to 7, **characterized in that** the respective frame element (13) has a concavely formed portion (17) between the front fastening portion (14) and the mounting portion (16).

9. Agricultural vehicle (1) according to one of claims 1 to 8, **characterized in that**, depending on the length to be spanned by the respective frame element (13), plate-shaped reinforcing elements can be fastened to the frame elements (13).

10. Agricultural vehicle (1) according to one of claims 1 to 9, **characterized in that** at least the frame elements (13) are detachably connected to the vehicle (1) by means of screw connections.

## Revendications

1. Véhicule agricole (1), en particulier, tracteur (2), comprenant une carrosserie de véhicule (3) sur laquelle sont disposés, dans la direction longitudinale, un moteur (11), un logement de masse d'inertie (12) ainsi qu'un carter de transmission, comprenant un train de roulement avant (6) et un train de roulement arrière (7) ainsi qu'un dispositif récepteur (10) pour le montage d'un outil de travail (8), **caractérisé en ce que** le dispositif récepteur (10) est conformé en deux éléments de châssis sensiblement en forme de plaques (13) qui s'étendent dans la direction longitudinale de la carrosserie de véhicule (3) entre le train de roulement avant (6) et le train de roulement arrière (7) et dont l'extension dans la direction longitudinale du véhicule (1) correspond à un multiple de leur extension verticale, et **en ce que** les éléments de châssis (13) comportent, pour le montage sur le véhicule (1), une portion de fixation avant (14) et une portion de fixation arrière (15) dont l'écartement mutuel est assez grand pour enjamber sans contact la zone de l'extension longitudinale du moteur (11), ainsi qu'une portion de réception (16) située entre la portion de fixation avant (14) et la portion de fixation arrière (15) pour le montage de l'outil de travail (8).

2. Véhicule agricole (1) selon la revendication 1, **caractérisé en ce que** la portion de fixation avant (14) de chaque élément de châssis (13) est fixée au train de roulement avant (6).

3. Véhicule agricole (1) selon une des revendications 1 ou 2, **caractérisé en ce que** la portion de fixation arrière (15) de chaque élément de châssis (13) est fixée au logement de masse d'inertie (12).

4. Véhicule agricole (1) selon une des revendications 1 à 3, **caractérisé en ce qu'**à partir de la portion de fixation arrière (15) de chaque élément de châssis (13), un rail de fixation (18) s'étendant dans la direction longitudinale du véhicule (1) est disposé sur l'élément de châssis (13).

5. Véhicule agricole (1) selon la revendication 4, **caractérisé en ce que** chaque rail de fixation (18) est relié par son extrémité au carter de transmission ou au train de roulement arrière (7) .

6. Véhicule agricole (1) selon une des revendications 1 à 5, **caractérisé en ce que** les éléments de châssis (13) sont conformés en pièces coulées.

7. Véhicule agricole (1) selon une des revendications 1 à 6, **caractérisé en ce que** les éléments de châssis (13) présentent, au moins d'un côté, une surface (19) structurée au moins par endroits.

8. Véhicule agricole (1) selon une des revendications 1 à 7, **caractérisé en ce que** chaque élément de châssis (13) présente une portion de forme concave (17) entre la portion de fixation avant (14) et la portion de réception (16).

9. Véhicule agricole (1) selon une des revendications 1 à 8, **caractérisé en ce qu'**en fonction de la longueur à enjamber par chaque élément de châssis (13), des éléments de renfort en forme de plaques peuvent être fixés aux éléments de châssis (13).

10. Véhicule agricole (1) selon une des revendications 1 à 9, **caractérisé en ce qu'**au moins les éléments de châssis (13) sont reliés au véhicule (1) de façon amovible au moyen d'assemblages vissés.
